# EUROPÄISCHE PATENTSCHRIFT

(11) **EP 1 165 213 B1**
(45) Veröffentlichungstag und Bekanntmachung des Hinweises auf die Patenterteilung: **02.07.2003**
(21) Anmeldenummer: 00902562.8
(22) Anmeldetag: 05.01.2000
(51) Int. Cl.: B01D 67/00, B29C 44/50, D01D 5/247

(54) **MEMBRAN UND DEREN VERWENDUNG**
MEMBRANE AND ITS USE
MEMBRANE ET SON UTILISATION

(30) Priorität: 24.02.1999 DE 19907824
(43) Veröffentlichungstag der Anmeldung: 02.01.2002
(73) Patentinhaber: Universität Twente, 7500 AH Enschede (NL)
(72) Erfinder: KRAUSE, Bernd, NL-7523 BE Enschede (NL); WESSLING, Matthias, NL-7531 EK Enschede (NL); STRATHMANN, Heiner, NL-7531 HR Enschede (NL)
(74) Vertreter: Weber, Dieter, Dr.
(86) Internationale Anmeldenummer: EP0000031
(87) Internationale Veröffentlichungsnummer: WO00050159

(56) Entgegenhaltungen:
- WO-A-96/38221
- DE-B- 1 247 636

## Beschreibung

Die Erfindung betrifft Membranen, insbesondere offenporige Membranen, die für Gastrennungen, Ultrafiltrationen oder insbesondere für medizinische Zwecke, wie für die Hämodialyse, Hämofiltration, Hämodiafiltration, Plasmapherese oder Immunotherapie verwendet werden können.

Aus der DE-A-19 520 188 ist ein Verfahren zur Herstellung von Polymer-Hohlfadenmembranen bekannt, bei dem ein geschmolzenes Polymer zur Bildung der Hohlfadenmembranen durch eine Extrusionseinrichtung geführt wird, wobei das Polymer unter Druck vor Eintritt in ein die Schmelze formendes Extrusionswerkzeug der Extrusionseinrichtung mit Gas beladen wird und wobei sich infolge eines beim Austritt des Polymers aus der Extrusionseinrichtung in vorbestimmbarem Maße erfolgenden Druckabfalls und der damit einhergehenden Expansion des Gases im Polymer eine poröse Hohlfadenmembran bildet. Die mit diesem Verfahren erzielte Offenporigkeit und Porengröße ergeben keine befriedigenden Trennergebnisse, da die prozentuale Offenporigkeit zu gering ist und die Poren zu groß sind. Die Porengröße bestimmt die Trennwirkung und der Grad der Offenporigkeit die Membraneffizienz.

Die WO 91/08 243 beschreibt ein Verfahren zur Herstellung offenzelliger Polyurethanschaumstoffe durch Vermischen eines Diisocyanates, eines Wasserstoffdonors, wenigstens eines oberflächenaktiven Stoffes, wenigstens eines Katalysators und eines Blähmittels, welches zweckmäßig Kohlendioxid ist, Unterdrucksetzen des Gemisches in der Mischzone, um das Blähmittel in flüssigem Zustand bei Umgebungstemperatur zu halten, Ausstoßen des Gemisches in eine Umgebung von Atmosphärendruck unter augenblicklichem Verdampfen des Blähmittels und Härtung des resultierenden Schaumstoffes bei Umgebungstemperatur. Für dieses Verfahren gelten die gleichen Nachteile wie für das oben geschilderte.

Die der Erfindung zugrundeliegende Aufgabe bestand nun darin, offenporige Membranen, insbesondere Flächen- oder Hohlfasermembranen zu erhalten, die einen möglichst hohen Grad an Offenporigkeit sowie möglichst kleine und gleichmäßige Größen der offenen Poren haben.

Erfindungsgemäß wird diese Aufgabe mit einer Membran gelöst, die herstellbar ist, indem man ein Polymer oder eine Polymermischung in die gewünschte Form bringt, das Polymer oder die Polymermischung bei Überatmosphärendruck vor oder nach der Formgebung mit einem Gas belädt, danach das mit Gas beladene Polymer bei einer Temperatur oberhalb der Glasübergangstemperatur der Polymer/Gas-Mischung schäumt und abschließend die Schaumstruktur unter Abkühlen stabilisiert. Erfindungsgemäß ist dieses Verfahren dadurch gekennzeichnet, daß man das mit Gas beladene Polymer mit einem Gehalt von 0,05 bis 4,0 Gew.% eines das Polymer lösenden oder quellenden Fluids schäumt. Dieses ist eine Flüssigkeit oder ein Gas, bevorzugt eine organische Flüssigkeit. Das Polymer lösende Flüssigkeiten sind bevorzugt.

Bisher war es üblich, Schaumstoffe mit der genannten Verfahrenstype unter Verwendung lösemitteifreier Polymer durchzuführen. Es war überraschend, daß durch die Anwesenheit einer kleinen Menge eines das Polymer lösenden oder quellenden Fluids, das hier im folgenden auch als Lösemittel bezeichnet wird, die Porenstruktur im Sinne der Aufgabenstellung verbessert wird, d. h. ein hoher Offenporigkeitsgrad sowie gleichmäßige kleine Porengrößen erzielt werden.

Bei der Beurteilung von Offenporigkeit kann auf folgende Weise vorgegangen werden:
a) Mit Hilfe von Rasterelektronenmikroskopaufnahmen:
   Hierbei wird die Probe in flüssigem Stickstoff gebrochen und die Bruchkante analysiert. Zeigen die Rasterelektronenmikroskopaufnahmen Öffnungen oder Durchbrüche in den Zellwänden, so zeigt diese eine Offenporigkeit an.
b) Mit Hilfe von Durchflußmessungen:
   Hierbei wird eine Probe in einer entsprechenden Meßeinrichtung fixiert, wobei die Enden der Membran jeweils in flüssigem Stickstoff gebrochen wurde. Die Probe wird in ein Harz eingebettet, so daß die Oberflächen und Seitenflächen vollständig abgedeckt sind. Ein offenes Ende wird mit einem Gas oder einer Flüssigkeit beaufschlagt, welches sich unter Druck befinden kann. Durch Messung des Volumenstromes an Gas oder Flüssigkeit kann die Offenporigkeit charakterisiert werden. Die Offenporigkeit zeichnet sich durch einen signifikant höheren Fluß im Vergleich zu geschlossenporigen Proben aus.
c) Durch Messen der kapillaren Steighöhe:
   Hierbei wird eine Probe in einer entsprechenden Meßaufstellung fixiert, wobei die Enden der Polymerprobe jeweils in flüssigem Stickstoff gebrochen wurde. Das Ende der fixierten Probe taucht ca. 2 bis 3 mm in eine Flüssigkeit oder Lösung ein. Nach entsprechender Zeit wird die Steighöhe des Flüssigkeitsspiegels in der Membran gemessen. Anhand von Gewichtsveränderungen sowie Steighöhe kann die Offenporigkeit charakterisisiert werden. Geschlossenporige Proben nehmen keine Flüssigkeit auf, und eine Steighöhe kann nicht gemessen werden.

Für die Herstellung der erfindungsgemäßen offenporigen Membranen kommen drei Verfahrenstypen in Betracht, die als solche an sich bekannt sind. Die erste Verfahrenstype ist das sogenannte Druckzellenverfahren, bei dem das Polymer oder die Polymermischung zunächst in die gewünschte Form gebracht und sodann bei Überatmosphärendruck und einer unter der Glasübergangstemperatur der Polymer/Gas-Mischung liegenden Temperatur mit einem Gas beladen wird. Sodann wird die Temperatur über die Glasübergangstemperatur der Polymer/Gas-Mischung erhöht, wie durch Eintauchen in ein Heizbad, und dabei das Gas aus dem Formling ausgetrieben, wobei sich die erwünschte Offenporigkeit ergibt.

Die zweite Verfahrenstype ist das sogenannte Autoklavenverfahren, bei dem die Beladung des Polymers oder der Polymermischung mit dem Gas bei einer Temperatur oberhalb der Glasübergangstemperatur der Polymer/Gas-Mischung erfolgt und das Schäumen durch spontanes Aufheben des Druckes eingeleitet wird. Im Gegensatz zu dem Druckzellenverfahren, bei dem das mit Gas beladene Polymer gewöhnlich in ein Heizbad geführt wird, um die Temperatur oberhalb der Glasübergangstemperatur zu erreichen, ist bei dem Autoklavenverfahren ein solches Aufheizen nicht erforderlich, da sich das Polymer bereits beim Beladen mit dem Gas auf der erforderlichen Temperatur oberhalb der Glasübergangstemperatur befindet.

Die dritte Verfahrenstype ist das sogenannte Extrusionsverfahren, bei dem man in einem formgebenden Extrusionswerkzeug eine Schmelze des Polymers oder des Polymergemisches mit dem Gas belädt. Beim Austreten aus dem Extrusionswerkzeug und dem dabei herbeigeführten Druckabfall kommt es zum Schäumen.

Bevorzugt ist derzeit das Druckzellenverfahren.

Die das Polymer lösende oder quellende Flüssigkeit kann in das lösemittelfreie Polymer oder Polymergemisch durch Infiltrieren eingeführt werden. Das Infiltrieren kann folgendermaßen vorgenommen werden. Das lösungsmittelfreie Polymer (Restlösemittelanteil <0,01 %) wird in einem Durchströmreaktor mit einem Gasstrom, welcher mit Lösemittel angereichert ist, behandelt. Hierbei erhöht sich die Lösemittelkonzentration im Polymer. Mit Hilfe von Temperatur, Gasstrom, Verweilzeit, Lösemittelkonzentration im Gasstrom können unterschiedliche Lösemittelkonzentrationen im Polymer eingestellt werden. Auch ist eine Behandlung denkbar, bei der sich das Polymer in einem mit Lösemittel gesättigten Dampfraum befindet. Bevorzugt, da verfahrenstechnisch einfacher, ist jedoch, bei der Herstellung des Polymers oder Polymergemisches die lösende oder quellende Flüssigkeit als Restlösemittel in dem Polymer zu belassen. Gegebenenfalls können auch beide Verfahrensarten gemeinsam angewendet werden, beispielsweise wenn bei der Polymerherstellung zu wenig Restlösemittel in dem Polymer oder der Polymermischung verblieben ist, so daß eine Ergänzung durch Infiltration folgen muß.

Der für das erwünschte Ergebnis zweckmäßige Gehalt der das Polymer lösenden oder quellenden Flüssigkeit hängt von den jeweils verwendeten Polymeren und Lösemitteln ab. Aufgrund der obigen Angaben ist es aber für den Fachmann ein Leichtes, anhand weniger Routineversuche zu ermitteln, welcher Lösemittelgehalt bei einem bestimmten Polymer und einem bestimmten Lösemittel sowie bei festliegenden Verfahrensparametem, wie Begasungsdruck beim Beladen des Polymers mit dem Gas und Schäumtemperatur, optimal ist.

Ungeachtet der Verfahrenstype können unterschiedliche Beladungsgase, wie Luft, Edelgase, Stickstoff, Tetrafluorethylen, Fluoroform, Hexafluorethan oder Gemische hiervon, benutzt werden, wie aus dem Stand der Technik bekannt ist. Bevorzugt wird jedoch Kohlendioxid als Beladungsgas verwendet. Günstigerweise geht man so vor, daß das Polymer oder die Polymermischung unter Druck mit dem Beladungsgas gesättigt wird.

Die beim Schäumen erhaltene Porenstruktur muß unter Abkühlen des Polymerformlings stabilisiert werden. Um nachträgliche Veränderungen der Porenstruktur während des Abkühlens zu vermeiden, ist es zweckmäßig, den Polymerformling nach dem Schäumen durch Abschrecken, vorzugsweise auf eine Temperatur unterhalb der Gasübergangstemperatur des Polymers, zu stabilisieren.

Die Schäumtemperatur hängt von den speziell verwendeten Polymeren ab. Üblicherweise liegt die Schäumtemperatur im Bereich von 100 bis 200 °C, doch ist der Erfindungsgegenstand nicht auf diesen Temperaturbereich beschränkt Auch die das Polymer lösenden oder quellenden, vorzugsweise organischen Flüssigkeiten, die im vorliegenden Verfahren eingesetzt werden, hängen von den verwendeten Polymeren und deren Löslichkeit ab. Zweckmäßige Beispiele dieser organischen Flüssigkeiten sind Tetrahydrofuran, 1,2-Dichlorethan und 1-Methyl-2-pyrrolidon.

Als Polymere im vorliegenden Verfahren kommen amorphe Kunststoffe, teilkristalline Kunststoffe, flüssigkristalline Kunststoffe, Duroplaste, gummielastische Kunststoffe oder Mischungen hiervon in Betracht. Zweckmäßige Beispiele der Polymere sind Polysulfone, Polyethersulfone, Polyetherketone, Polyaramide, Polycarbonate, Cellulose und Cellulosederivate, wie Celluloseester oder Celluloseether.

Wie eingangs erwähnt, ist es besonders zweckmäßig, die erfindungsgemäßen Membranen in der Form einer Flächen- oder Hohlfasermembran herzustellen. Solche Membranen können für Gastrennungen, zweckmäßig aber für medizinische Zwecke, wie für die Hämodialyse, Hämofiltration, Hämodiafiltration, Plasmapherese oder Immunotherapie, oder auch für nichtmedizinische Zwecke, wie als Mikro- oder Ultrafiltrationsmembran, benutzt werden. Je nach dem Verwendungszweck können die Membranen symmetrisch oder asymmetrisch sein, wobei asymmetrisch bedeutet, daß sie im Anschluß an eine der beiden Oberflächen größere Porengrößen als im Anschluß an die andere Oberfläche haben oder auf einer der Oberflächen sogar geschlossene Poren oder eine geschlossene Haut haben können.

Die folgenden Beispiele dienen der weiteren Erläuterung der Erfindung.

### Beispiele

Die folgenden Beispiele wurden durchwegs in der nachfolgend beschriebenen Weise durchgeführt, wobei lediglich die Polymere, Lösemittel und Schäumtemperaturen verändert wurden.

Das angegebene Polymer wurde in einer Menge von 20 Gew.% in dem nachfolgend angegebenen Lösemittel aufgelöst. Diese Lösung wurde mit einem Streichmesser in einer Dicke von 0,50 mm auf eine Glasplatte aufgestrichen. In einem Stickstoffgasstrom wurde der Polymerfilm getrocknet. Zur Einstellung der Restlösemittelkonzentration wurde sodann zusätzlich im Vakuumtrockenschrank getrocknet. Die Restlösemittelkonzentration wurde variiert.

Der so erhaltene restlösemittelhaltige Polymerfilm wurde bei 50 bar und ca. 20 bis 25 °C mit Kohlendioxid während 2 h in einer Druckzelle gesättigt. Nach Ablassen des Druckes und Öffnen der Druckzelle wurde der Polymerfilm 10 bis 60 sec in ein Heizbad mit der nachfolgend angegebenen Schäumtemperatur eingetaucht. Nach dem Schäumen wurde der Polymerfilm in einer Mischung von Ethanol und Wasser auf ca. 20 °C abgeschreckt.

### Beispiel 1

In diesem Beispiel wurde als Polymer ein Polysulfon (Udel P-3500, Amoko) mit Lösemittelrestkonzentrationen an Tetrahydrofuran verwendet Dabei wurde eine Schäumtemperatur von 165 °C angewendet. Bei einem Restlösemittelgehalt (Tetrahydrofuran) von 1,23 Gew.%, 0,94 Gew.%, 0,68 Gew.%, 0,38 Gew.%, 0,33 Gew.%, 0,24 Gew.%, 0,10 Gew.% und 0,07 Gew.% wurden jeweils offenzellige Membranen erhalten. Wenn der Restlösemittelgehalt auf 0,01 % abgesenkt wurde, wurden stattdessen geschlossenzellige Membranen erhalten.

### Beispiel 2

Das Beispiel 1 wurde unter Verwendung von 1,2-Dichlorethan wiederholt. Bei einem Restlösemittelgehalt von 3,4 Gew.% und einer Schäumtemperatur von 165 °C wurde eine offenzellige Membran erhalten. Bei 8,0 Gew.% Restlösemittelgehalt dagegen wurden nur geschlossenzellige Membranen erhalten.

### Beispiel 3

Anstelle von Polysulfon wurde in diesem Beispiel ein Polyethersulfon (5200-P, ICI) als Polymer verwendet. Als organische Flüssigkeit oder Lösemittel wurde 1-Methyl-2-pyrrolidon eingesetzt. Die Schäumtemperatur lag bei 185 °C. Bei einem Restlösemittelgehalt von 4,39 Gew.%, 4,3 Gew.%, 3,54 Gew.%, 3,47 Gew.% und 2,48 Gew.% wurden offenzellige Membranen erhalten. Bei einem Restlösemittelgehalt von 5,66 Gew.% dagegen waren die Membranen geschlossenzellig.

### Beispiel 4

In diesem Beispiel wurde als Polymer ein Polycarbonat (BPZ-PC S 24/4, Bayer) in Verbindung mit Tetrahydrofuran als Lösemittel und einer Schäumtemperatur von 140 °C verwendet. Bei Restlösemittelgehalten von 0,50 Gew.%, 0,36 Gew.% und 0,31 Gew.% wurden offenzellige Membranen erzeugt.

## Patentansprüche

1. Membran, herstellbar, indem man ein Polymer oder Polymergemisch in die gewünschte Form bringt, bei Überatmosphärendruck vor oder nach der Formgebung mit einem Gas belädt, danach das mit Gas beladene Polymer bei einer Temperatur oberhalb der Glasübergangstemperatur der Polymer/Gas-Mischung schäumt und abschließend die Schaumstruktur unter Abkühlen stabilisiert, **dadurch gekennzeichnet, daß** man das mit Gas beladene Polymer mit einem Gehalt von 0,05 bis 4,5 Gew.% einer das Polymer lösenden oder quellenden Fluids schäumt.

2. Membran nach Anspruch 1, **dadurch gekennzeichnet, daß** man das Polymer oder Polymergemisch nach der Formgebung bei einer unter der Glasübergangstemperatur der Polymer/Gas-Mischung liegenden Temperatur mit dem Gas belädt und sodann durch Erhöhung der Temperatur auf oberhalb der Glasübergangstemperatur der Polymer/Gas-Mischung schäumt.

3. Membran nach Anspruch 1, **dadurch gekennzeichnet, daß** man nach der Formgebung bei einer oberhalb der Glasübergangstemperatur der Polymer/Gas-Mischung liegenden Temperatur mit dem Gas belädt und danach durch Druckverminderung schäumt.

4. Membran nach Anspruch 1, **dadurch gekennzeichnet, daß** man vor der Formgebung die Schmelze des Polymers oder Polymergemisches mit dem Gas in einem Extrusionswerkzeug belädt und beim Extrudieren durch den hierbei auftretenden Druckabfall schäumt.

5. Membran nach einem der Ansprüche 1 bis 4, **dadurch gekennzeichnet, daß** man als das Polymer lösende oder quellende Fluid eine organische Flüssigkeit, vorzugsweise eine solche, die das Polylmer löst, verwendet.

6. Membran nach einem der Ansprüche 1 bis 5, **dadurch gekennzeichnet, daß** das Polymer beim Schäumen das das Polymer lösende oder quellende Fluid in Form von Restlösemittel oder in der Form von infiltriertem Lösemittel enthält.

7. Membran nach einem der Ansprüche 1 bis 6, **dadurch gekennzeichnet, daß** man den Gehalt des das Polymer lösenden oder quellenden Fluids in Abhängigkeit von dem verwendeten Polymer, von dem verwendeten Lösemittel, von dem Begasungsdruck beim Beladen des Polymers mit dem Gas und von der Schäumtemperatur optimiert.

8. Membran nach einem der Ansprüche 1 bis 7, **dadurch gekennzeichnet, daß** man als Beladungsgas Kohlendioxid verwendet.

9. Membran nach einem der Ansprüche 1 bis 8, **dadurch gekennzeichnet, daß** man das Polymer unter Druck mit dem Beladungsgas sättigt.

10. Membran nach einem der Ansprüche 1 bis 9, **dadurch gekennzeichnet, daß** man die Schaumstruktur durch Abschrecken nach dem Schäumen stabilisiert.

11. Membran nach einem der Ansprüche 1 bis 10, **dadurch gekennzeichnet, daß** man bei einer Schäumtemperatur von 100 bis 200 °C arbeitet.

12. Membran nach einem der Ansprüche 5 bis 11, **dadurch gekennzeichnet, daß** man als die das Polymer lösende oder quellende organische Flüssigkeit Tetrahydrofuran, 1,2-Dichlorethan oder 1-Methyl-2-pyrrolidon verwendet.

13. Membran nach einem der Ansprüche 1 bis 12, **dadurch gekennzeichnet, daß** man als Polymer ein Polysulfon, Polyethersulfon, Polycarbonat, Celullose oder eine Cellulosederivat verwendet

14. Membran nach einem der Ansprüche 1 bis 13, **dadurch gekennzeichnet, daß** sie in der Form einer Flächen- oder Hohlfasermembran vorliegt.

15. Verwendung einer Membran nach Anspruch 14 für medizinische Zwecke, insbesondere für die Hämodialyse, Hämofiltration, Hämodiafiltration, Plasmapherese oder Immunotherapie, oder für die Mikro- oder Ultrafiltration.

## Claims

1. Membrane, that can be manufactured in that a polymer or polymer mix is shaped as required, is charged with a gas at above atmospheric pressure before or after shaping, then the gas-charged polymer is foamed at a temperature above the glass transition temperature of the polymer/gas mixture, and lastly, the foam structure is stabilised by cooling, **characterised in that** the gas charged polymer is foamed using an amount of 0.05% to 4.5% by weight of a fluid that dissolves or swells the polymer.

2. Membrane according to claim 1, **characterised in that** after shaping, the polymer or polymer mix is charged with the gas at a temperature below the glass transition temperature of the polymer/gas mixture, and then is foamed by increasing the temperature to above the glass transition temperature of the polymer/gas mixture.

3. Membrane according to claim 1, **characterised in that** gas-charging is done after shaping at a temperature above the glass transition temperature of the polymer/gas mixture, and then foaming by reduction of pressure.

4. Membrane according to claim 1, **characterised in that** before shaping, the molten mass of polymer or polymer mix is charged with the gas in an extrusion tool, and upon extrusion is foamed due to the resultant drop in pressure that occurs.

5. Membrane according to one of claims 1 to 4, **characterised in that** the fluid that dissolves or swells the polymer is an organic liquid, preferably one that dissolves the polymer.

6. Membrane according to one of claims 1 to 5, **characterised in that** when foaming takes place, the polymer contains the fluid that dissolves or swells the polymer in the form of solvent residue or in the form of infiltrated solvent.

7. Membrane according to one of claims 1 to 6, **characterised in that** the amount of the fluid that dissolves or swells the polymer is optimised depending on the polymer used, the solvent used, the gas-charging pressure when the polymer is charged with the gas, and the foaming temperature.

8. Membrane according to one of claims 1 to 7, **characterised in that** carbon dioxide is used as the charging gas.

9. Membrane according to one of claims 1 to 8, **characterised in that** the polymer is saturated under pressure with the charging gas.

10. Membrane according to one of claims 1 to 9, **characterised in that** the foam structure is stabilised by chilling after foaming.

11. Membrane according to one of claims 1 to 10, **characterised in that** a foaming temperature of 100 to 200°C is employed.

12. Membrane according to one of claims 5 to 11, **characterised in that** tetrahydrofuran, 1,2-dichloroethane or 1-methyl-2-pyrrolidone is used as the organic liquid that dissolves or swells the polymer.

13. Membrane according to one of claims 1 to 12, **characterised in that** a polysulfone, polyethersulfone, polycarbonate, cellulose or a cellulose derivative is used as the polymer.

14. Membrane according to one of claims 1 to 13, **characterised in that** it is in the form of a surface fibre or hollow fibre membrane.

15. Use of a membrane according to claim 14 for medical purposes, in particular for haemodialysis, blood filtration, haemodiafiltration, plasma phoresis or immunotherapy, or for micro or ultrafiltration.

## Revendications

1. Membrane, susceptible d'être fabriquée en ce que l'on met un polymère ou un mélange de polymères sous la forme souhaitée, qu'on le charge d'un gaz, à une pression supérieure à la pression atmosphérique, avant ou après le formage, après quoi on fait mousser le polymère chargé en gaz à une température supérieure à la température de transition vitreuse du mélange polymère/gaz, puis on stabilise la structure alvéolaire par refroidissement, **caractérisée en ce que** l'on fait mousser le polymère chargé en gaz avec une quantité de 0,05 à 4,5 % en poids d'un fluide dissolvant ou gonflant le polymère.

2. Membrane selon la revendication 1, **caractérisée en ce que** l'on charge en gaz le polymère ou le mélange de polymère après le formage, à une température inférieure à la température de transition vitreuse du mélange polymère/gaz, et que l'on fait mousser ensuite par augmentation de la température au-delà de la température de transition vitreuse du mélange polymère/gaz.

3. Membrane selon la revendication 1, **caractérisée en ce que** l'on charge en gaz après le formage à une température supérieure à la température de transition vitreuse du mélange polymère/gaz, puis que l'on fait mousser par réduction de la pression.

4. Membrane selon la revendication 1, **caractérisée en ce que** l'on charge en gaz la masse fondue du polymère ou du mélange de polymères avant le formage, dans un outil d'extrusion, et que l'on fait mousser lors de l'extrusion par la réduction de pression survenant alors.

5. Membrane selon l'une des revendications 1 à 4, **caractérisée en ce que** l'on utilise, en tant que fluide dissolvant ou gonflant le polymère, un liquide organique, de préférence un liquide qui dissout le polymère.

6. Membrane selon l'une des revendications 1 à 5, **caractérisée en ce que** le polymère contient, lors du moussage, le fluide dissolvant ou gonflant le polymère, sous la forme de solvant résiduel ou sous la forme de solvant infiltré.

7. Membrane selon l'une des revendications 1 à 6, **caractérisée en ce que** l'on rend optimale la teneur en fluide dissolvant ou gonflant le polymère en fonction du polymère utilisé, du solvant utilisé, de la pression de gazage lors du chargement du polymère en gaz, et de la température de moussage.

8. Membrane selon l'une des revendications 1 à 7, **caractérisée en ce que** l'on utilise du dioxyde de carbone en tant que gaz de charge.

9. Membrane selon l'une des revendications 1 à 8, **caractérisée en ce que** l'on sature le polymère sous pression avec le gaz de charge.

10. Membrane selon l'une des revendications 1 à 9, **caractérisée en ce que** l'on stabilise la structure alvéolaire par trempe après le moussage.

11. Membrane selon l'une des revendications 1 à 10, **caractérisée en ce que** l'on travaille à une température de moussage de 100 à 200 °C.

12. Membrane selon l'une des revendications 5 à 11, **caractérisée en ce que** l'on utilise comme fluide organique dissolvant ou gonflant le polymère, du tétrahydrofurane, du 1,2-dichlororéthane ou de la 1-méthyl-2-pyrrolidone.

13. Membrane selon l'une des revendications 1 à 12, **caractérisée en ce que** l'on utilise en tant que polymère une polysulfone, une polyéthersulfone, un polycarbonate, une cellulose ou un dérivé de cellulose.

14. Membrane selon l'une des revendications 1 à 13, **caractérisée en ce qu'**elle se présente sous la forme d'une membrane plate ou d'une membrane à fibres creuses.

15. Utilisation d'une membrane selon la revendication 14 à des fins médicales, en particulier pour l'hémodialyse, l'hémofiltration, l'hémodiafiltration, la plasmaphérèse ou l'immunothérapie, ou pour la micro- ou l'ultrafiltration.
